# FASCICULE DE BREVET EUROPEEN

(11) **EP 2 094 978 B1**
(45) Date de publication et mention de la délivrance du brevet: **26.09.2012**
(21) Numéro de dépôt: 07847876.5
(22) Date de dépôt: 06.12.2007
(51) Int. Cl.: F16B 39/14

(54) **ECROU A COLLET DEFORMABLE**
MUTTER MIT VERFORMBAREM BUND
NUT WITH A DEFORMABLE COLLAR

(30) Priorité: 06.12.2006 FR 0610627
(43) Date de publication de la demande: 02.09.2009
(73) Titulaire: Lisi Automotive Nomel, 61550 La Ferté Frenel (FR)
(72) Inventeur: MOLINA, Francis, 93300 Aubervilliers (FR); THERY, Lionel, 61300 Le Mesnil (FR)
(74) Mandataire: Texier, Christian
(86) Numéro de dépôt international: PCT/EP2007/063388
(87) Numéro de publication internationale: WO 2008/068300

(56) Documents cités:
- FR-A- 698 853
- FR-A- 2 047 142
- GB-A- 191 224 055
- JP-A- 11 315 820
- US-A- 1 697 602
- US-A- 4 139 038

## Description

La présente invention concerne un dispositif selon le préambule de la revendication 1 (FR2047142A).

On connaît de nombreux dispositifs de serrage à base de tige filetée associée à un écrou pour assembler plusieurs pièces.

Les problèmes associés à ces dispositifs sont notamment de prévenir ou d'empêcher la perte de l'écrou par exemple sous l'action de fortes vibrations externes, chocs ou efforts continus.

On a déjà proposé de nombreuses solutions pour résoudre ces problèmes.

Ainsi, on connaît des dispositifs permettant d'éviter le dévissage de l'écrou par freinage de l'écrou lui-même. Ces dispositifs proposent généralement des écrous à déformation radiale et des écrous conventionnels présentant une bague en nylon qui s'engage avec la vis pour créer une résistance à la rotation et empêcher la perte de l'écrou.

Une autre approche pour éviter le dévissage de l'écrou consiste à utiliser des rondelles freins ou éléments équivalents placés entre l'écrou et la vis.

On propose ainsi des rondelles présentant sur leur périphérie radiale interne une ou plusieurs pattes de fixation venant se déformer élastiquement, lors du serrage du système écrou/vis, entre les filets de vis pour éviter la perte de l'écrou.

On trouvera des exemples de tels dispositifs notamment dans les documents US 4 139 038, GB 325251 et JP 11315820.

Cependant, les dispositifs connus ne donnent pas toujours totalement satisfaction.

En conséquence, un but de la présente invention est d'améliorer les dispositifs de serrage existants.

Un autre but de la présente invention est de proposer un dispositif de serrage économique et simple à mettre en oeuvre.

Un autre but de la présente invention est de proposer un dispositif de serrage permettant d'éviter de manière fiable que l'ensemble vis/écrou ne se sépare conduisant à une perte de l'écrou sous l'effet de vibrations.

Ce but est atteint, dans le cadre de la présente invention, grâce à un dispositif selon la revendication 1.

L'invention sera mieux comprise et d'autres avantages apparaîtront à la lecture de la description qui va suivre, donnée à titre d'exemples non limitatifs et grâce aux dessins annexés parmi lesquels:
- La figure 1 est une vue en coupe longitudinale d'un dispositif de serrage disposé sur deux pièces à assembler avant serrage ;
- La figure 2 est une vue en perspective d'un écrou du dispositif de serrage de la figure 1;
- La figure 3 est une vue en perspective d'une rondelle de freinage du dispositif de serrage de la figure 1;
- La figure 4 est une vue en coupe longitudinale du dispositif de serrage de la figure 1 après serrage;
- La figure 5 est une vue en perspective avec détail à échelle agrandie de la coopération entre une tige filetée et une rondelle de freinage du dispositif de la figure 1 lors du serrage ;
- Les figures 6 à 8 sont des vues en coupe transversale montrant l'évolution de la coopération entre une tige filetée et une rondelle de freinage du dispositif de la figure 1 lors du serrage, suivant un plan de coupe VI-VI de la figure 1 passant par le sommet d'un collet;
- La figure 9 montre une vue en coupe longitudinale d'un dispositif de serrage conforme à la présente invention disposé sur deux pièces à assembler avant serrage;
- La figure 10 représente une vue en perspective et en coupe d'un écrou du dispositif de la figure 9;
- La figure 11 montre une vue en coupe longitudinale dispositif de serrage
- La figure 12 est une vue en perspective d'une rondelle de freinage du dispositif de serrage de la figure 11;
- La figure 13 est une vue axiale d'une rondelle et d'un écrou du dispositif de serrage de la figure 11.

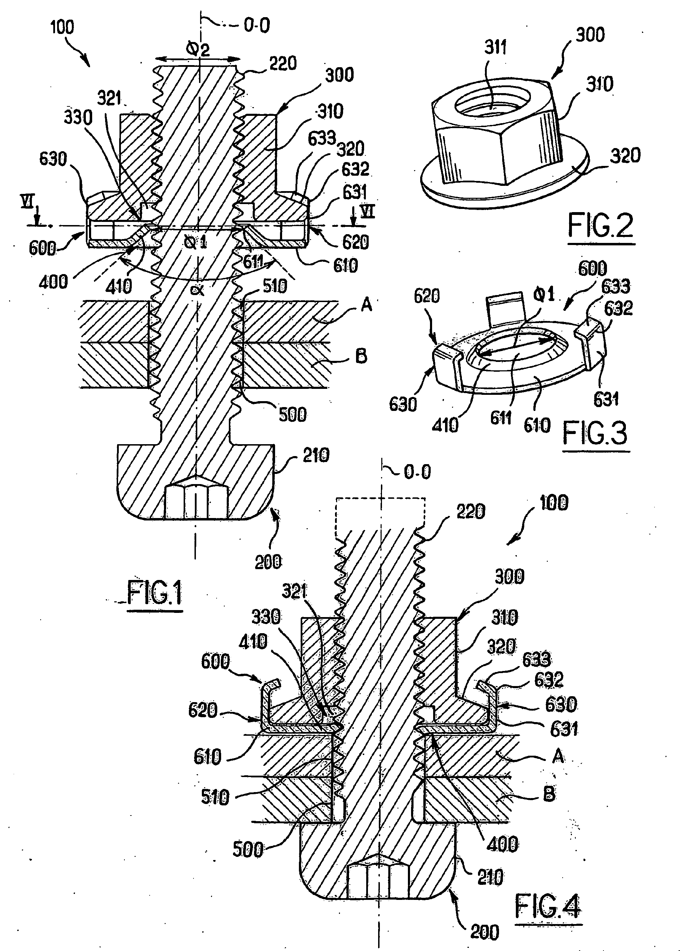

Sur la figure 1, on observe un dispositif de serrage 100 conforme à la présente invention destiné à assembler deux pièces A et B.

Ce dispositif de serrage 100 comprend un ensemble formé d'un écrou 300 et d'une pièce de freinage 400 agencé pour être monté sur une vis 200.

La vis 200 destinée à traverser les deux pièces à assembler A et B comprend une tige filetée 220 centrée sur un axe filaire de rotation O-O qui se prolonge à une extrémité axiale par une tête élargie 210.

La vis 200 s'engage par sa tige filetée 220 respectivement dans deux orifices traversants coaxiaux 500, 510 pourvus sur les pièces B et A de diamètres internes adaptés jusqu'à ce que la tête 210 de la vis 200 vienne reposer contre la face de la pièce B opposée à la pièce A.

L'écrou 300 s'engage sur la tige filetée 220 de la vis 200 à l'extrémité axiale opposée à la tête 210 de la vis 200.

Comme illustré sur les figures 1 et 2, l'écrou 300 comprend classiquement un corpus 310 à faces latérales externes multiples (typiquement de section droite hexagonale) pour mettre en prise un outil de rotation destiné à appliquer une contrainte de tension à la vis 200 lorsque l'écrou 300 est vissé sur celle-ci.

Ce corps 310 présente en son centre un alésage taraudé 311 destiné à coopérer avec la tige filetée 220 lors du vissage.

Il se prolonge par une embase annulaire 320 à une extrémité axiale dirigée vers la face de la pièce A à assembler opposée à la pièce B (soit du côté de la tête 210).

Cette embase 320 est un disque plan qui fait saillie par rapport à la périphérie externe du corps 310 de l'écrou 300.

Elle comprend un évidement 321 annulaire centré sur l'axe filaire O-O qui présente une paroi latérale cylindrique de révolution de diamètre supérieur au diamètre externe de l'alésage taraudé 311.

Par ailleurs, avantageusement, la pièce de freinage 400 est destinée à coopérer avec l'écrou 300 et la vis 200 en assurant un freinage mécanique entre ces deux éléments permettant d'éviter, en cas de desserrage, la perte de l'écrou 300 sous de fortes vibrations ou chocs.

Elle comprend un moyen de freinage 410 et, plus précisément, un collet 410 continu et déformable adapté pour coopérer avec les filets de la tige filetée 220 de la vis 200.

Ce collet 410 peut être réalisé en tout matériau approprié. Par exemple, il peut être en alliage métallique ou en matériau plastique.

Sur les figures 1, 3 et 4, la pièce de freinage 400 est solidaire d'une rondelle de freinage 600 engagée sur la tige filetée 220 entre l'embase 320 de l'écrou 300 et la pièce A à assembler.

Elle peut être venue de matière avec la rondelle de freinage 600 ou solidarisée par tout moyen approprié à cette dernière.

La rondelle de freinage 600 est constituée d'un corps annulaire 610 dont une face d'appui va reposer contre la face de la pièce A opposée à la pièce B.

Ce corps annulaire 610 est muni d'un perçage central 611 et se prolonge sur sa périphérie interne par le collet 410 destiné à coopérer avec la tige filetée 220 de la vis 200.

De forme sensiblement tronconique, le collet 410 converge par rapport à l'axe filaire O-O vers son extrémité libre.

Avantageusement, le collet 410 se dresse axialement d'un angle α compris entre 20° et 160°.

Il présente une épaisseur constante ainsi qu'un diamètre interne adapté pour permettre le passage de la tige filetée 220 de la vis 200.

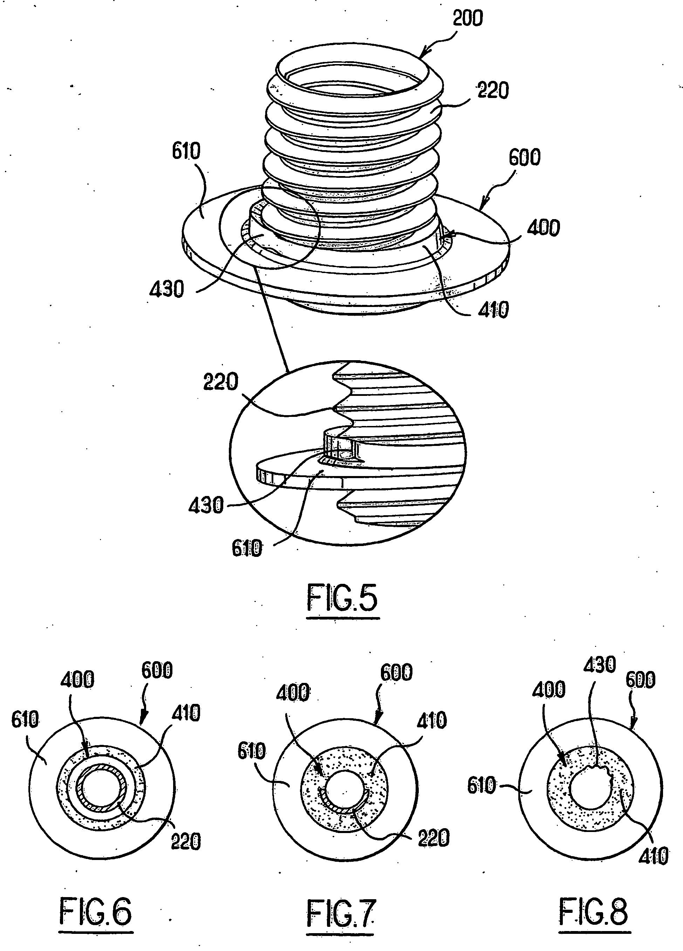

Plus précisément, en position de repos c'est-à-dire avant serrage des deux pièces A et B, le collet 410 présente un diamètre interne φ1 supérieur au diamètre externe φ2 du filetage de la tige filetée 220 de la vis 200 comme illustré sur les figures 1 et 6.

Lors de l'assemblage des deux pièces A et B, l'écrou 300 est engagé par un couple de serrage sur la tige filetée 220 dans une direction de rotation autour de l'axe filaire 220.

Le collet 410 tend à s'aplatir comme le corps annulaire 610 de la rondelle 600 contre la pièce A sous la pression exercée par des moyens de sollicitation 330 ménagés sur l'écrou 300. Il s'agit de la position représentée sur la figure 4.

Ces moyens de sollicitation 330 sont adaptés pour déformer le collet 410 dans les filets de la tige filetée 220.

Dans la variante illustrée sur les figures 1 et 4, les moyens de sollicitation 330 sont définis par la périphérie radiale interne de l'embase 320 de l'écrou 300 indiquée par l'évidement 321.

Ce dernier présente un diamètre interne adapté pour permettre de solliciter le collet 410 à la déformation.

Ce diamètre est compris entre les diamètres interne et externe du collet 410 de sorte que la périphérie radiale interne de l'embase 320 vienne appuyer sur le collet 410 lors du serrage de l'écrou 300 pour qu'il se déforme.

Ainsi, une autre variante prévoit un écrou 300 comprenant une embase 320 avec un évidement 321 de forme tronconique.

La forme tronconique de l'évidement 321 est adaptée pour pouvoir solliciter le collet tronconique 410 à se déformer. Plus précisément, le demi angle d'ouverture de l'évidement 321 défini entre l'axe filaire O-O et une directrice du tronc de cône est différent du demi angle d'ouverture du collet 410.

Par ailleurs, une autre variante prévoit un écrou 300 comprenant une embase 320 sans évidement 321. Cette embase 320 présente une face d'appui plane, opposée au corps 310 de l'écrou 300 et perpendiculaire à l'axe filaire O-O, adaptée pour solliciter le collet 410 à se déformer.

Une autre variante propose la coopération entre un écrou 300 présentant un évidement 321 de forme tronconique, cet évidement 321 étant adapté pour déformer un collet 410 cylindrique de révolution par rapport à l'axe filaire O-O.

Lors du serrage, le collet 410 passe d'une position de repos à une position de travail où il est soumis à une déformation radiale tel qu'illustré sur la figure 7.

Son diamètre interne φ1 devient inférieur au diamètre externe φ2 du filetage de la tige filetée 220 de sorte qu'il vient se déformer plastiquement radialement contre le filetage de la tige filetée 220 de la vis 200.

Lors de sa déformation, il rencontre au moins un sommet de filet de la tige filetée 220. Comme illustré sur les figures 5 et 8, ce sommet de filet de la tige filetée 220 vient mordre localement dans la périphérie radiale interne du collet 410 et une entaille 430 localisée se forme à cette périphérie.

La présence de cette entaille 430 sur le collet 410 permet d'exercer une immobilisation à rotation entre le collet 410 et la tige filetée 220, et ce faisant d'exercer un serrage par frottement prononcé sur la tige filetée 220 comme le diamètre interne φ1 du collet 410 devient inférieur au diamètre externe φ2 du filetage de la tige filetée 220.

Elle fournit un effet de freinage sur la tige filetée 220 maintenant celle-ci contre tout mouvement non intentionnel de la vis 200 par rapport à l'ensemble rondelle de freinage 600 / pièce de freinage 400.

L'entaille 430 participe à l'interdiction de tout dévissage et toute rotation non intentionnels résultant d'effets de vibrations, par exemple, qui seraient susceptibles ordinairement de conduire à la perte de l'écrou 300.

D'autre part, lorsque le collet 410 vient en prise avec les filets de la tige filetée 220, il pénètre et peut s'imprimer dans les fonds de filets adjacents au sommet de filet mordant de la tige filetée 220 si le diamètre interne φ1 du collet 220 est égal au diamètre interne du filetage de la tige filetée 220.

Cette liaison de frottement permettant au collet 410 d'enserrer la tige filetée 220 participe également à l'effet de freinage désiré.

Par ailleurs, comme illustré sur les figures 1, 3 et 4, la rondelle de freinage 600 est munie de moyens 620 pour s'engager avec l'écrou 300 permettant à la fois un mouvement axial relatif limité de l'écrou 300 par rapport à la rondelle de freinage 600 et un mouvement relatif de rotation de la rondelle 600 par rapport à l'écrou 300.

La rondelle 600 présente une cage de rétention 620 pour loger une partie de l'écrou 300, cette cage 620 comprenant une ou plusieurs pattes de rétention 630 destinées à retenir l'écrou 300 lors d'un éventuel dévissage de ce dernier sur la tige filetée 220 prévenant ainsi sa perte.

De préférence, ces pattes 630 sont équi réparties sur la périphérie externe du corps annulaire 610 de la rondelle 600 en saillie sur la même face du corps 610 que le collet 410.

Chaque patte 630 sensiblement en forme de L comprend une première portion 631 qui s'étend à partir du corps annulaire 610 parallèlement à l'axe filaire O-O, se prolonge par un coude 632 arrondi de forme complémentaire à la périphérie externe de l'embase 320 de l'écrou 300 et se termine par une seconde portion 633 dirigée radialement vers le perçage central 611 qui vient en appui sur la face supérieure de l'embase 320 dirigée vers le corps 310 de l'écrou 300.

Les longueurs des premières et secondes portions 631, 633 des pattes 630 sont adaptées pour permettre aux pattes 630 d'enjamber l'embase 320 de l'écrou 300 pour se reposer sur sa face supérieure et retenir l'écrou 300 avec la rondelle de freinage 600.

Lors du serrage des deux pièces A et B, l'écrou 300 vient se plaquer contre le corps annulaire 610 de la rondelle 600 et il apparaît un jeu axial entre la face supérieure de l'embase 320 de l'écrou 300 et la seconde portion 633 de chaque patte de rétention 630.

Ce jeu axial permet un mouvement relatif limité de l'écrou 300 par rapport à la rondelle 600 lors d'un éventuel dévissage.

On limite ainsi tout dévissage de l'écrou susceptible de conduire à sa perte.

Par ailleurs, la rondelle de freinage 600 peut tourner dans une direction de rotation autour de l'axe filaire O-O par rapport à l'écrou 300 grâce à la coopération entre l'embase 320 annulaire de l'écrou 300 et les pattes de rétention 630 de forme adaptée à cette embase 320.

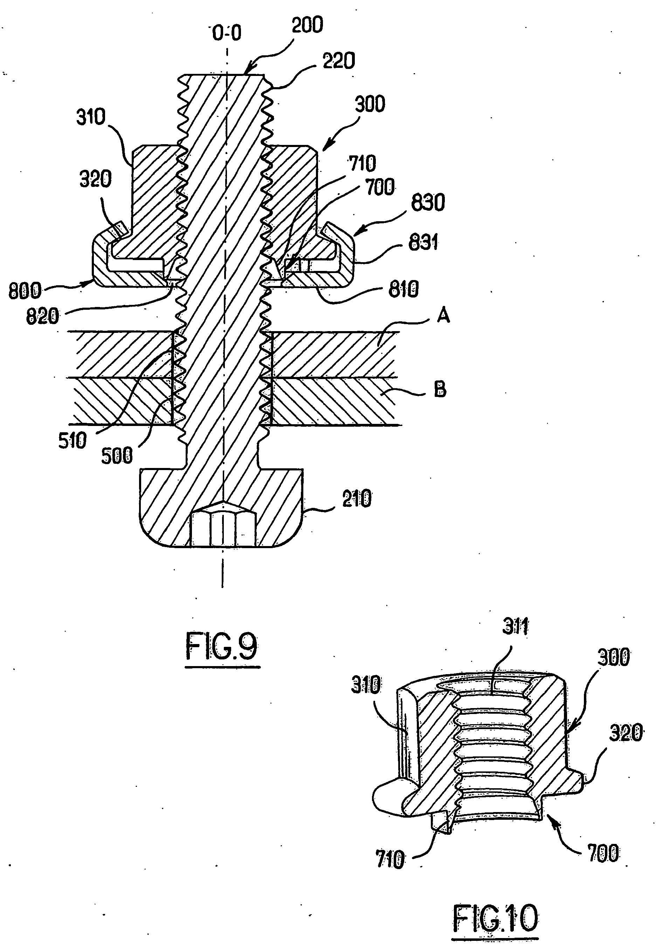

Les figures 9 et 10 présentent un dispositif de serrage 100 conforme à la présente invention dont la structure diffère de celle des figures 1 à 8 par la pièce de freinage, l'écrou et la rondelle proposés.

Dans ce mode de réalisation, la pièce de freinage 700 est solidaire de l'écrou 300.

Ainsi, l'écrou 300 est pourvu d'un collet 710 continu pour obtenir un effet de freinage similaire à celui produit par l'écrou 300 et la pièce de freinage 400 séparés tel que décrit précédemment en relation avec les figures 1 à 8.

Le collet 710 est situé le long de la périphérie radiale interne de l'écrou 300, en saillie de la face de l'embase 320 opposée au corps 310 de l'écrou 300.

Dans une variante de réalisation, le collet 710 s'étend à partir de ladite embase 320 parallèlement à l'axe filaire O-O.

Il présente une face externe cylindrique de révolution par rapport à l'axe filaire O-O et une face interne tronconique qui diverge par rapport à l'axe filaire O-O vers son extrémité libre.

De plus, ce collet 710 coaxial avec l'alésage taraudé 311 de l'écrou 300 présente un diamètre interne adapté pour recevoir la tige filetée 220.

Par ailleurs, dans ce mode de réalisation, les moyens de sollicitation comprennent une rondelle de sollicitation 800 interposée entre l'écrou 300 et la pièce à serrer A pour assurer la déformation du collet 710 dans les filets de la tige filetée 220 lors du serrage des deux pièces A et B.

Cette rondelle de sollicitation 800 se présente sous la forme d'un disque mince 810 dans lequel est ménagé une ouverture centrale 820 dont le diamètre interne est adapté pour recevoir la tige filetée 220.

L'ouverture centrale 820 est évasée vers la face du disque mince 810 dirigée vers l'embase 320 de l'écrou 300.

Lors du serrage, la périphérie de l'ouverture centrale 820 sollicite le collet 710 pour qu'il se déforme dans les filets de la tige filetée 220.

Elle conduit ce dernier vers les filets de la tige filetée 220 et comprime l'espace entre lui et les filets.

Comme précédemment décrit en référence avec les figures 1 à 8, le collet 710 se déforme plastiquement.

Une entaille se forme sur la périphérie radiale interne du collet 710 au niveau de son intersection avec au moins un sommet de filet de la tige filetée 220 et le collet 710 vient s'imprimer dans les fonds de filet de la tige filetée 220.

On exerce, avec la présence de l'entaille, une immobilisation à rotation entre le collet 710 et la tige filetée 220 et on réalise ainsi un effet de freinage efficace pour éviter tout mouvement de rotation indésirable entre l'écrou 300 et la vis 200 garantissant un assemblage résistant aux vibrations et chocs éventuels.

Dans une autre variante de ce mode de réalisation, on peut prévoir un écrou 300 présentant un collet 710 de forme tronconique dont la convexité est dirigée par rapport à l'axe filaire O-O vers le corps 310 de l'écrou 300. Ce collet 710 va coopérer avec une rondelle de sollicitation 800 comprenant une ouverture centrale 820 cylindrique de révolution par rapport à l'axe filaire O-O.

L'ouverture centrale 820 présente alors un diamètre compris entre le diamètre interne et le diamètre externe du collet 710 de sorte que la périphérie radiale interne de la rondelle de sollicitation 800 vienne appuyer sur le collet 710 pour le déformer dans les filets de la tige filetée 220.

Par ailleurs, ces rondelles de sollicitation 800 sont de préférence munies d'une cage de rétention d'écrou 830 présentant une ou plusieurs pattes de rétention d'écrou 831 dont la structure est similaire à celle définie précédemment en référence aux figures 1 à 4 pour permettre à la fois un mouvement axial limité de l'écrou 300 par rapport à la rondelle de sollicitation 800 et un mouvement de rotation de la rondelle de sollicitation 800 par rapport à l'écrou 300.

Dans une autre variante de ce mode de réalisation, on peut prévoir que les moyens de sollicitation comprennent la pièce à serrer A pour assurer la déformation du collet 710 dans les filets de la tige filetée 220 lors du serrage avec la pièce B.

La pièce A présente alors un orifice traversant 510 évasé vers la face de la pièce A dirigée vers l'embase 320 de l'écrou 300.

Lors du serrage, la périphérie de l'orifice traversant 510 sollicite le collet 710 pour qu'il se déforme dans les filets de la tige filetée 220.

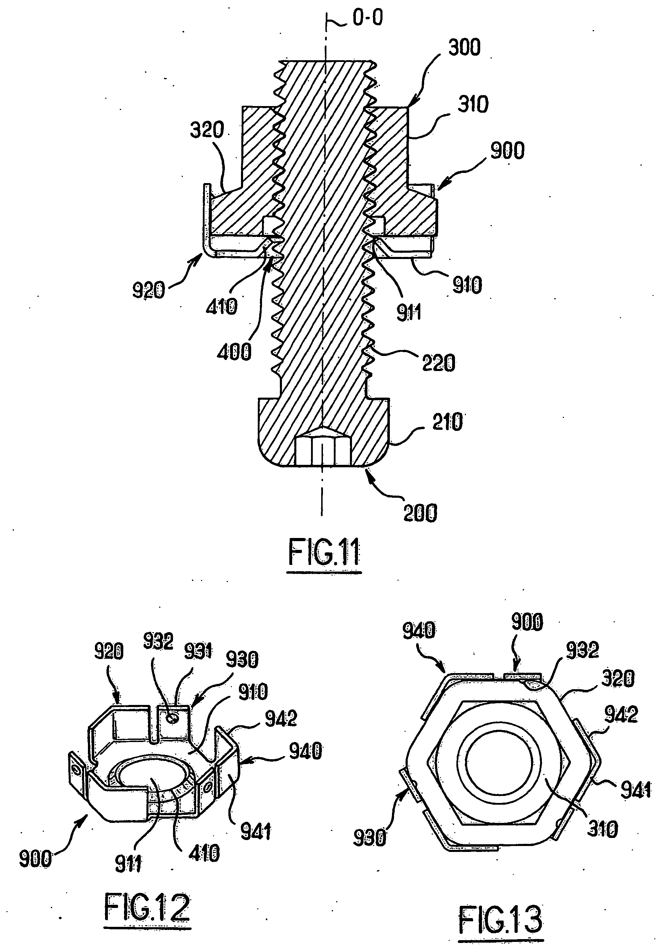

Les figures 11 à 13 présentent un dispositif de serrage 100 dont la structure diffère de celle des figures 1 à 8 notamment par la rondelle de freinage proposée.

Sur ces figures, la rondelle de freinage 900 munie de la pièce de freinage 400 est solidaire en rotation avec l'écrou 300 par tout moyen approprié.

La rondelle de freinage 900 présente un corps 910 mince de forme hexagonale.

Ce corps 910 est pourvu d'un perçage central 911 et, à sa périphérie interne, du collet 410 tronconique tel que décrit en référence avec les figures 1 à 8.

Avantageusement, la rondelle de freinage 900 présente des moyens d'engagement avec l'écrou 300 adaptés pour permettre un mouvement axial relatif limité de l'écrou 300 par rapport à la rondelle 900 tout en interdisant un mouvement relatif de rotation de la rondelle 900 par rapport à l'écrou 300.

Plus précisément, le corps 910 de la rondelle se prolonge sur sa périphérie externe par une cage de rétention d'écrou 920 destinée à coopérer avec l'embase 320 de l'écrou 300 pour interdire toute rotation de la rondelle de freinage 900 par rapport à l'écrou 300.

Cette cage de rétention 920 est complémentaire de la section droite de l'écrou 300.

L'ensemble corps 910 et cage de rétention 920 fournit un logement de dimensions adaptées pour recevoir l'embase 320 de l'écrou 300 dont la section est de forme hexagonale.

La cage de rétention d'écrou 920 comprend une pluralité de pattes de rétention destinées à retenir l'écrou 300 lors d'un éventuel dévissage de ce dernier sur la tige filetée 220 de la vis 200 évitant ainsi sa perte.

Sur les figures 12 et 13, on observe deux types de pattes de rétention 930 et 940 alternées sur la périphérie externe du corps 910 de la rondelle 900.

Chacune d'elles comprend au moins une portion plan faisant saillie de la face supérieure du corps 910 de la rondelle 900 et s'étendant sensiblement perpendiculairement à ce dernier et parallèlement à une face latérale externe de l'embase 320.

Pour le premier type de pattes de rétention 930, chaque patte 930 présente sur la face interne 931 de la portion plan tournée vers l'intérieur du logement au moins un picot 932 destiné à venir se loger sur la face de l'embase 320 dirigée vers le corps 310 de l'écrou 300 pour retenir l'écrou 300 avec la rondelle et freinage 900.

Ces pattes 930 sont présentes de préférence sur un coté sur deux du corps 910 de la rondelle 900.

Pour le second type de pattes de rétention 940, chaque patte 940 présente une section sensiblement en forme de V dans le sens périphérique dont une branche 941 vient en appui sur une face latérale externe de l'embase 320 tandis que l'autre branche 942 vient en appui sur l'une des faces latérales externes de l'embase 320 adjacentes à la première.

La concavité du V de chaque patte 940 est adaptée pour recevoir le coude formé par l'intersection de ces deux faces latérales externes de l'écrou 300.

Grâce à la cage de rétention d'écrou 920, la rondelle de freinage 900 n'est pas libre en rotation par rapport à l'écrou 300.

## Revendications

1. Dispositif de serrage (100) de pièces à assembler comprenant :
- un écrou (300) comportant un corps (310) prolongé par une embase annulaire (320),
- une tige filetée (220) pouvant se visser dans l'écrou (300) et
- une pièce de freinage (400) coopérant avec l'écrou (300) et la tige filetée (220),
la pièce de freinage (400) étant destinée à être appliquée entre ledit écrou (300) et l'une des pièces à assembler,
**caractérisé en ce que** l'écrou (300) comporte en outre un collet (710) continu déformable destiné à coopérer avec la tige filetée (220) et situé le long d'une périphérie radiale interne de l'écrou (300), en saillie d'une face de l'embase (320) opposée au corps (310) de l'écrou (300),
ledit collet (710) étant adapté pour présenter une position de repos, avant serrage de l'écrou, avec un diamètre interne supérieur au diamètre externe du filetage de la tige filetée (220) et une position de travail, après serrage de l'écrou et déformation conséquente, dans laquelle son diamètre interne est inférieur au diamètre externe du filetage de la tige filetée (220) de sorte que, lors du serrage, une entaille (430) localisée à la périphérie radiale interne du collet (710) se forme par l'intersection avec au moins un sommet de filet de la tige filetée (220) et que le collet (710) pénètre dans des fonds de filets adjacents au sommet de filet de la tige filetée.

2. Dispositif selon la revendication 1, **caractérisé en ce qu'**il comprend, en outre, des moyens de sollicitation adaptés pour permettre la déformation du collet (710) dans les filets de la tige filetée (220), l'un et/ou l'autre du collet (710) ou des moyens de sollicitation présentant une forme tronconique.

3. Dispositif selon la revendication 2, **caractérisé en ce que** les moyens de sollicitation comprennent une rondelle de sollicitation (800) interposée entre l'écrou (300) et une pièce à assembler, ladite rondelle (800) étant adaptée pour déformer le collet (710) dans le filetage de la tige filetée (220).

4. Dispositif selon la revendication précédente, **caractérisé en ce que** la rondelle de sollicitation (800) comprend un corps dans lequel est ménagé une ouverture centrale évasée (820) vers une face dudit corps (810) dirigée vers l'écrou (300), ladite ouverture centrale évasée (820) étant destinée à coopérer avec un collet (710) s'étendant parallèlement à la tige filetée (220).

5. Dispositif selon la revendication 3, **caractérisé en ce que** la rondelle de sollicitation (800) comprend un corps dans lequel est ménagé une ouverture centrale (820) cylindrique de révolution (820), ladite ouverture centrale (820) étant destinée à coopérer avec un collet (710) de forme tronconique.

6. Dispositif selon l'une des revendications 3 à 5, **caractérisé en ce que** la rondelle de sollicitation (800) présente des moyens d'engagement avec l'écrou (300) adaptés pour permettre un mouvement axial relatif limité de l'écrou (300) par rapport à la rondelle (800) tout en permettant un mouvement relatif de rotation de la rondelle (800) par rapport à l'écrou (600).

7. Dispositif selon l'une des revendications 3 à 6, **caractérisé en ce que** la rondelle de sollicitation (800) présente des moyens d'engagement avec l'écrou (300) adaptés pour permettre un mouvement axial relatif limité de l'écrou (300) par rapport à la rondelle (800) tout en interdisant un mouvement relatif de rotation de la rondelle (800) par rapport à l'écrou (300).

8. Dispositif selon la revendication 1 ou 2, **caractérisé en ce que** les moyens de sollicitation comprennent la pièce à assembler en contact de l'écrou (300), ladite pièce à assembler étant adaptée pour déformer le collet (710) dans le filetage de la tige filetée (220).

9. Dispositif selon l'une des revendications précédentes, **caractérisé en ce que** le collet (710) est en matériau plastique ou métallique.

10. Écrou mis en oeuvre dans un dispositif de serrage selon l'une des revendications précédentes.

11. Pièce de freinage mise en oeuvre dans un dispositif de serrage selon l'une des revendications 1 à 9.

## Claims

1. A clamping device (100) to tighten parts to be assembled comprising:
- a nut (300) including a body (310) extended by an annular base (320);
- a threaded rod (220) screwable into the nut (300); and
- a self-locking part (400) cooperating with the nut (300) and the threaded rod (220);
the self-locking part (400) being intended to be applied between said nut (300) and one of the parts to be assembled,
**characterized in that** the nut (300) further comprises a continuous deformable neck (710) intended to cooperate with the threaded rod (220) and located along an inner radial periphery of the nut (300) projecting from a face of the base (320) opposite the body (310) of the nut (300),
said neck (710) being adapted to have a rest position, before tightening the nut, with an inner diameter larger than the outer diameter of the thread of the threaded rod (220), and a working position after tightening the nut and subsequent deformation in which its inner diameter is smaller than the outer diameter of the thread of the threaded rod (220) so that, during tightening, a notch (430) located on the inner radial periphery of the neck (710) is formed by the intersection with at least one thread crest of the threaded rod (220) and so that the neck (710) enters into thread roots adjacent the thread crest of the threaded rod.

2. The device according to claim 1 **characterized in that** it further comprises forcing means adapted to enable deformation of the neck (710) in the threads of the threaded rod (220), the neck (710) and/or the forcing means being of truncated cone shape.

3. The device according to claim 2 **characterized in that** the forcing means comprise a loading washer (800) inserted between the nut (300) and a part to be assembled, said washer (800) being adapted to deform the neck (710) into the thread of the threaded rod (220).

4. The device according to the preceding claim, **characterized in that** the loading washer (800) comprises a body in which there is arranged a central opening (820) flared towards a face of said body (810) directed towards the nut (300), said central flared opening (820) being intended to cooperate with a neck (710) extending parallel to the threaded rod (220).

5. The device according to claim 3, **characterized in that** the loading washer (800) comprises a body in which there is arranged a central opening (820) in the form of a cylinder of revolution (820) said central opening (820) being intended to cooperate with a neck (710) of truncated cone shape.

6. The device according to one of claims 3 to 5 **characterized in that** the loading washer (800) has means for engaging with the nut (300) adapted to enable limited axial movement of the nut (300) relative to the washer (800) whilst enabling rotational movement of the washer (800) relative to the nut (600).

7. The device according to one of claims 3 to 6 **characterized in that** the loading washer (800) has means for engaging with the nut (300) adapted to allow limited axial movement of the nut (300) relative to the washer (800) whilst prohibiting rotational movement of the washer (800) relative to the nut (300).

8. The device according to claim 1 or 2 **characterized in that** the urging means comprise the part to be assembled in contact with the nut (300), said part to be assembled being adapted to deform the neck (710) into the thread of the threaded rod (220).

9. The device according to one of the preceding claims **characterized in that** the neck (710) is in plastic or metallic material.

10. A nut used in a tightening device according to any of the preceding claims.

11. A self-locking part used in a tightening device according to one of claims 1 to 9.

## Patentansprüche

1. Vorrichtung zum Festziehen (100) von zusammenzufügenden Teilen , umfassend:
- eine Mutter (300) mit einem Körper (310), der sich durch einen ringförmigen Sockel (320) fortsetzt,
- einen Gewindestab (220), der in die Mutter (300) eingeschraubt werden kann, und
- ein Arretierteil (400), das mit der Mutter (300) und dem Gewindestab (220) zusammenwirkt,
wobei das Arretierteil (400) dafür vorgesehen ist, zwischen der Mutter (300) und einem der zusammenzufügenden Teile angeordnet zu werden,
**dadurch gekennzeichnet, dass** die Mutter (300) ferner einen durchgängigen, verformbaren Bund (710) aufweist, der für das Zusammenwirken mit dem Gewindestab (220) vorgesehen ist, und der entlang eines radialen Innenumfangs der Mutter (300), vorspringend über eine Fläche des Sockels (320), die dem Körper (310) der Mutter (300) gegenüber liegt, angeordnet ist,
wobei der Bund (710) dafür ausgelegt ist, eine Ruhestellung vor dem Festziehen der Mutter aufzuweisen, mit einem Innendurchmesser, der größer als der Außendurchmesser des Gewindes des Gewindestabs (220) ist, und eine Arbeitsstellung nach dem Festziehen der Mutter und entsprechender Verformung, in der ihr Innendurchmesser kleiner als der Außendurchmesser des Gewindes des Gewindestabs (220) ist, so dass sich beim Festziehen eine am radialen Innenumfang des Bundes (710) angeordnete Einkerbung (430) durch Schneiden mit mindestens einer Spitze des Gewindes des Gewindestabs (220) bildet, und so dass der Bund (710) in die Gewindezwischenräume eingreift, die an die Spitze des Gewindes des Gewindestabs (220) angrenzen.

2. Vorrichtung nach Anspruch 1, **dadurch gekennzeichnet, dass** sie ferner Vorspannmittel umfasst, die dafür geeignet sind, die Verformung des Bundes (710) in den Gewinden des Gewindestabs (220) zu ermöglichen, wobei der Bund (710) und/oder die Vorspannmittel eine Kegelstumpfform aufweisen.

3. Vorrichtung nach Anspruch 2, **dadurch gekennzeichnet, dass** die Vorspannmittel eine Vorspannscheibe (800) umfassen, die zwischen der Mutter (300) und einem zusammenzufügenden Teil eingefügt ist, wobei die Scheibe (800) dafür geeignet ist, den Bund (710) in dem Gewinde des Gewindestabs (220) zu verformen.

4. Vorrichtung nach dem vorhergehenden Anspruch, **dadurch gekennzeichnet, dass** die Vorspannscheibe (800) einen Körper umfasst, in dem eine mittige aufgeweitete Öffnung (820) in Richtung einer Fläche des Körpers (810), die zu der Mutter (300) gerichtet ist, vorgesehen ist, wobei die mittige aufgeweitete Öffnung (820) für das Zusammenwirken mit einem Bund (710) vorgesehen ist, der sich parallel zu dem Gewindestab (220) erstreckt.

5. Vorrichtung nach Anspruch 3, **dadurch gekennzeichnet, dass** die Vorspannscheibe (800) einen Körper umfasst, in dem eine mittige rotationssymmetrische Öffnung (820) vorgesehen ist, wobei die mittige Öffnung (820) für das Zusammenwirken mit einem kegelstumpfförmigen Bund (710) vorgesehen ist.

6. Vorrichtung nach einem der Ansprüche 3 bis 5, **dadurch gekennzeichnet, dass** die Vorspannscheibe (800) Mittel für den Eingriff mit der Mutter (300) aufweist, die dafür geeignet sind, eine begrenzte relative axiale Bewegung der Mutter (300) relativ zu der Scheibe (800) zu ermöglichen, jedoch gleichzeitig eine relative Rotationsbewegung der Scheibe (600) relativ zu der Mutter (300) zu ermöglichen.

7. Vorrichtung nach einem der Ansprüche 3 bis 6, **dadurch gekennzeichnet, dass** die Vorspannscheibe (800) Mittel für den Eingriff mit der Mutter (300) aufweist, die dafür geeignet sind, eine begrenzte relative axiale Bewegung der Mutter (300) relativ zu der Scheibe (800) zu ermöglichen, jedoch gleichzeitig eine relative Rotationsbewegung der Scheibe (800) relativ zu der Mutter (300) zu verhindern.

8. Vorrichtung nach Anspruch 1 oder 2, **dadurch gekennzeichnet, dass** die Vorspannmittel das zusammenzufügende Teil in Kontakt mit der Mutter (300) umfassen, wobei das zusammenzufügende Teil dafür geeignet ist, den Bund (710) in dem Gewinde des Gewindestabs (220) zu verformen.

9. Vorrichtung nach einem der vorhergehenden Ansprüche, **dadurch gekennzeichnet, dass** der Bund (70) aus Kunststoff oder aus Metall ist.

10. Mutter, die in einer Festziehvorrichtung nach einem der vorhergehenden Ansprüche verwendet wird.

11. Arretierteil, das in einer Festziehvorrichtung nach einem der Ansprüche 1 bis 9 verwendet wird.
